# EUROPEAN PATENT APPLICATION

(11) **EP 4 383 117 A1**
(43) Date of publication of application: **12.06.2024**
(21) Application number: 22211891.1
(22) Date of filing: 07.12.2022
(51) Int. Cl.: G06F 30/28, F03D 7/02, G06F 111/06, G06F 111/20, G06F 113/06

(54) **METHODS FOR OPTIMIZING WIND TURBINE BLADE ASSEMBLIES**

(71) Applicant: LM Wind Power A/S, 6000 Kolding (DK)
(72) Inventor: HURAULT, Jeremy, 50110 Manche (FR)
(74) Representative: de Rooij, Mathieu Julien

(57) **Abstract**

The present disclosure relates to wind turbine blade assemblies comprising a wind turbine blade and a plurality of aerodynamic add-ons. The aerodynamic add-ons may be asymmetrically arranged on the suction and pressure side of the blade. The aerodynamic add-ons may include add-ons of a plurality of different types. The present disclosure further relates to computer-implemented methods for determining a configuration of a wind turbine blade assembly including a wind turbine blade and a plurality of aerodynamic add-ons, and to computer programs and data processing systems configured to carry out such methods.

## Description

### FIELD

The present disclosure relates to wind turbine blades and methods for optimizing wind turbine blades and sections of wind turbine blades. The present disclosure particularly relates to methods and systems for optimizing wind turbine blades taking into account noise constraints.

### BACKGROUND

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. This rotation generates a torque that is normally transmitted through a rotor shaft to a generator, either directly (in the case of "directly driven" or "gearless" wind turbines) or through the use of a gearbox. This way, the generator produces electricity which can be supplied to the electrical grid.

The wind turbine hub may be rotatably coupled to a front of the nacelle. The wind turbine hub may be connected to a rotor shaft, and the rotor shaft may then be rotatably mounted in the nacelle using one or more rotor shaft bearings arranged in a frame inside the nacelle. The nacelle is a housing arranged on top of a wind turbine tower that may contain and protect the gearbox (if present) and the generator (if not placed outside the nacelle) and, depending on the wind turbine, further components such as a power converter, and auxiliary systems.

Wind turbines may be designed with an average wind speed, and average wind speed distribution in mind. Based on such an average wind speed (distribution), a wind turbine may be designed with a specific rated ("nominal") power, a specific rated ("nominal") rotational speed, and a certain rotor diameter in mind. Based on such a nominal design of a wind turbine, the blades of the wind turbine may be designed and developed.

Given the wind speed distribution, rotor speed, rotor diameter and nominal power, aerodynamic properties of the blade in terms of lift and drag etc. may be determined which can result in a desirable airfoil distribution along the length of the blade. Further input for the design may be the intended operational life of the wind turbine, e.g. 20 years. Taking into account constraints in terms of loads that have to be withstood throughout the operational life, the design of the blade may be further optimized. Wind turbine bade developers' focus in this respect may be to minimize the cost for a given performance.

The result of the optimization process may be a blade which complies with the expected performance in terms of aerodynamics, operation, mass and loads, and which has the lowest cost. In particular, levelized cost of energy (LCOE) is a measure that may be taken into account by wind turbine and wind turbine blade developers. LCOE is a measure of the average net present cost of electricity generation for a generator over its lifetime. It may be used for investment planning and to compare different methods of electricity generation. Different methods for determining LCOE exist, and different inputs may be taken into account depending on which method is used. The input can include the cost of capital, decommissioning, fuel costs, fixed and variable operations and maintenance costs, financing costs, and an assumed utilization rate.

However, in practice, the wind speed distribution is not the same in all sites. Also, in some sites or countries, specific noise constraints may exist, or noise generation may be penalized. Wind turbines may thus be operated differently than originally intended, leading to different loads, and different than intended performance of the blades. Furthermore, the same wind turbine blade may be used on different wind turbine designs.

Therefore, even if wind turbine blade manufacturers have gone through a meticulous design optimization process, the blade design may and generally will inevitably be suboptimal in at least some implementations. It is however not possible in practice to develop a new (optimized) wind turbine blade for each market or situation in which it may be used, or even for each new wind turbine design. Beyond the time and cost involved in the development of a new blade, the manufacturing of new molds for a new optimized design would be cost prohibitive.

The present disclosure provides examples of improved wind turbine blades, and methods and systems for optimizing wind turbine blades taking into account specific design constraints, such as e.g. noise or loads or improved power output.

### SUMMARY

In an aspect of the present disclosure, a wind turbine blade assembly is provided. The wind turbine blade assembly comprises a wind turbine blade extending in a longitudinal direction between a blade root and a blade tip and the wind turbine blade having a leading edge, a trailing edge and a pressure side and a suction side. The assembly further comprises a plurality of aerodynamic add-ons of a first type arranged at the pressure side extending from a first to a second longitudinal position, and a plurality of aerodynamic add-ons of the first type arranged at a suction side extending from a third to a fourth longitudinal positions. Herein, the third longitudinal position does not coincide with the first longitudinal position and/or the fourth longitudinal position does not coincide with the second longitudinal positions.

According to this aspect, a wind turbine blade assembly is provided with improved performance e.g. in terms of aerodynamic performance (lift, drag, moments or other) or in terms of noise. It has been found that improved performance can be achieved by abandoning an implicit design constraint of providing aerodynamic add-ons on both the suction side and the pressure side, but asymmetrically on the suction side with respect to the pressure side of the blade.

In a further aspect, a computer-implemented method for determining a configuration of a wind turbine blade assembly including a wind turbine blade and a plurality of aerodynamic add-ons is provided. The method comprises receiving one or more design constraints, receiving a wind speed distribution, determining a virtual model of a base design for the wind turbine blade and determining a plurality of blade sections, wherein the blade sections correspond to spanwise extending portions of the wind turbine blade.

The method further comprises a) selecting one or more of the blade sections for modification, b) generating an updated virtual blade assembly by changing a configuration of virtual aerodynamic add-ons in one or more of the selected blade sections, wherein the virtual aerodynamic add-ons are selected from a virtual library and c) determining a performance of the updated virtual blade assembly according to the wind speed distribution by calculating an objective function.

The method further comprises optimizing the objective function while respecting the design constraints by reiterating the steps a) - c) until a convergence criterion has been satisfied.

The method according to this aspect recognizes that any wind turbine blade design will not be optimal for different markets, different wind speed distributions, or different noise requirements. The method also recognizes that it would be impossible to provide new molds for the blade shells for every application with slightly or moderately different requirements. The design of the wind turbine blade may still be improved or optimized for new conditions by including aerodynamic add-ons. In accordance with this aspect, a method is provided which efficiently is able to determine which aerodynamic add-ons may be used on a blade, and in which positions to improve the blade assembly's performance for a specific application.

In a further aspect, a data processing system which is configured to carry out such a method is provided. In yet a further aspect, a computer program is provided which comprises instructions which, when the program is executed by a computer, cause the computer to carry out such a method.

And in a further aspect, a computer-readable data carrier is provided having stored thereon such a computer program. In yet a further aspect, a data carrier signal carrying such a computer program is provided.

In yet another aspect of the present disclosure, a wind turbine blade assembly is provided which comprises a wind turbine blade extending in a longitudinal direction between a blade root and a blade tip and the wind turbine blade having a leading edge, a trailing edge and a pressure side and a suction side, a plurality of aerodynamic add-ons of a first type arranged at the pressure side extending from a first to a second longitudinal position, and a plurality of aerodynamic add-ons of a second type, different from the first type, arranged at a suction side extending from the first to the second longitudinal positions.

In optimizing wind turbine blade assemblies with different objectives (particularly reducing noise, increasing lift or aerodynamic efficiency for a given wind speed), it has been found that asymmetric distribution of aerodynamic add-ons may be beneficial.

In a further aspect, a wind turbine blade assembly is provided. The wind turbine blade assembly comprises a wind turbine blade extending in a longitudinal direction between a blade root and a blade tip and the wind turbine blade having a leading edge, a trailing edge and a pressure side and a suction side. The assembly further comprises a plurality of aerodynamic add-ons arranged at the pressure side extending from a first to a second longitudinal position, and a plurality of aerodynamic add-ons arranged at a suction side extending from a third to a fourth longitudinal positions, and wherein the first, second, third and fourth positions are arranged in an outer half of the wind turbine bade, and wherein the third longitudinal position does not coincide with the first longitudinal position and/or the fourth longitudinal position does not coincide with the second longitudinal positions.

In yet a further aspect, a wind turbine blade assembly is provided. The wind turbine blade assembly comprises a wind turbine blade extending in a longitudinal direction between a blade root and a blade tip and the wind turbine blade having a leading edge, a trailing edge and a pressure side and a suction side. The assembly further comprises trailing edge serrations along the trailing edge from a first longitudinal position to a second longitudinal position, wherein a plurality of aerodynamic add-ons are arranged at the pressure side between the first and the second longitudinal position, and a plurality of aerodynamic add-ons arranged at a suction side between the first and the second longitudinal position. The arrangement of aerodynamic add-ons at the pressure side between the first and second longitudinal position is different from the arrangement of aerodynamic add-ons at the suction side.

In yet another aspect, the present disclosure provides a wind turbine blade assembly comprising a wind turbine blade extending in a longitudinal direction between a blade root and a blade tip and the wind turbine blade having a leading edge, a trailing edge and a pressure side and a suction side. The blade assembly further comprises trailing edge serrations extending from a first longitudinal position to a second longitudinal position, and including no trailing edge serrations between the second longitudinal position and third longitudinal position, and further comprising trailing edge serrations extending from the third longitudinal position to a fourth longitudinal position.

In yet a further aspect, the present disclosure a wind turbine blade assembly comprising a wind turbine blade extending in a longitudinal direction between a blade root and a blade tip and the wind turbine blade having a leading edge, a trailing edge and a pressure side and a suction side is provided. The blade assembly further comprises a first plurality of aerodynamic add-ons arranged at the pressure side extending from a first longitudinal position to a second longitudinal position, and a second plurality of aerodynamic add-ons arranged at the suction side extending from the first to the second longitudinal position. The blade assembly further comprises trailing edge serrations along the trailing edge from the first longitudinal position to the second longitudinal position. The blade assembly also comprises a third plurality of aerodynamic add-ons arranged at the pressure side between a third longitudinal position and a fourth longitudinal position, and a fourth plurality of aerodynamic add-ons arranged at the suction side between the third longitudinal position and the fourth longitudinal position, wherein no trailing edge serrations are provided between the third and fourth longitudinal position.

The various aspects disclosed herein may also be combined.

Throughout the present disclosure, aerodynamic add-ons may be regarded as element or components that are added to a wind turbine blade to influence and specifically enhance their aerodynamic properties. They may be regarded as being added to the blade, since they are not integrated in the blade in the blade molding process. The aerodynamic add-ons may be attached to an outer surface of the wind turbine blade to improve the power production of the blade (or the wind turbine comprising the blades), to reduce the noise level of the blade and/or to somehow adapt the aerodynamic properties of the blade. Often, these blade add-ons may protrude from the blade surface, i.e. the suction surface or the pressure surface.

Throughout the present disclosure, aerodynamic add-ons are designated to be of a different type when an aerodynamic add-on has a different objective and/or is based on another aerodynamic principle than another add-on. Additionally, an aerodynamic add-on may also be of a different type even if its functioning is based on the same aerodynamic principles but it has a significantly different size than another aerodynamic add-on.

### BRIEF DESCRIPTION OF THE DRAWINGS

Figure 1 illustrates a perspective view of an example of a wind turbine;
Figure 2A illustrates a perspective view of an example of a wind turbine blade;
Figure 2B schematically illustrates an internal structure of a wind turbine blade;
Figure 2C schematically illustrates an example of a wind turbine blade assembly including a plurality of aerodynamic add-ons;
Figure 3A schematically illustrates an example of a method for determining a configuration of a wind turbine blade assembly;
Figures 3B - 3E schematically illustrates how blade assemblies, using a same standard blade design, may be optimized differently depending on the specific objectives and/or constraints in different implementation; and
Figures 4A - 4D schematically illustrate examples of wind turbine blade assemblies according to the present disclosure.

### DETAILED DESCRIPTION OF EXAMPLES

Reference now will be made in detail to embodiments of the present disclosure, one or more examples of which are illustrated in the drawings. Each example is provided by way of explanation only, not as a limitation. In fact, it will be apparent to those skilled in the art that various modifications and variations can be made in the present disclosure. For instance, features illustrated or described as part of one embodiment can be used with another embodiment to yield a still further embodiment. Thus, it is intended that the present disclosure covers such modifications and variations as come within the scope of the appended claims and their equivalents.

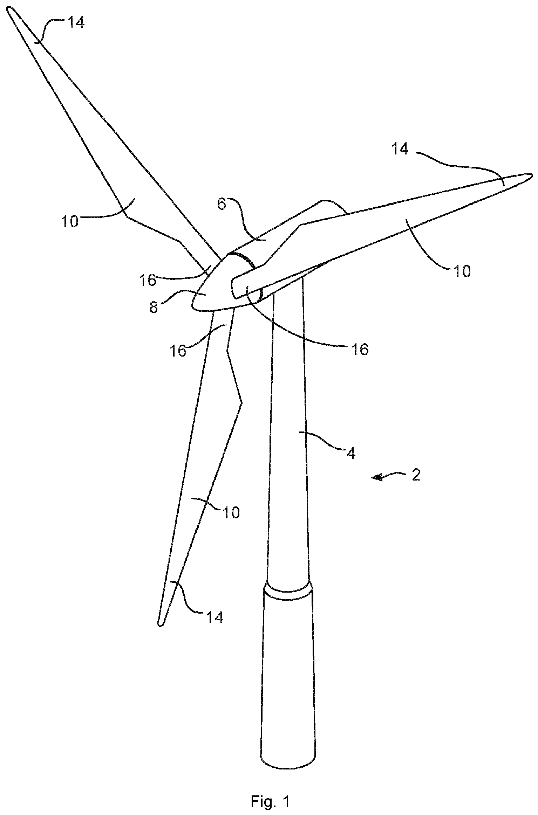

Fig. 1 illustrates a conventional modern upwind wind turbine 2 according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8.

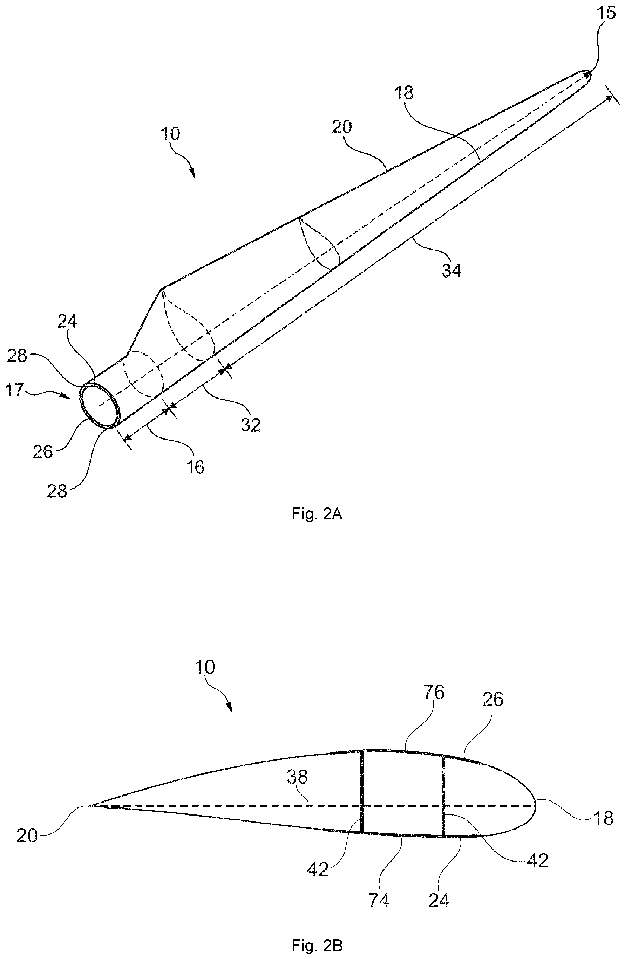

Fig. 2A shows a schematic view of an exemplary wind turbine blade 10. The wind turbine blade 10 has the shape of a conventional wind turbine blade with a root end 17 and a tip end 15 and comprises a root region 16 closest to the hub, a profiled or an airfoil region 34 furthest away from the hub and a transition region 32 between the root region 16 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34, also called the profiled region, has an ideal or almost ideal blade shape with respect to generating lift, whereas the root region 16, due to structural considerations, has a substantially circular or elliptical cross-section, which for instance makes it easier and safer to mount the blade 10 to the hub. The diameter (or the chord) of the root region 16 may be constant along the entire root area 16. The transition region 32 has a transitional profile gradually changing from the circular or elliptical shape of the root region 16 to the airfoil profile of the airfoil region 34. The chord length of the transition region 32 typically increases with increasing distance from the hub. The airfoil region 34 has an airfoil profile with a chord extending between the leading edge 18 and the trailing edge 20 of the blade 10. The width of the chord decreases with increasing distance from the hub.

A shoulder 40 of the blade 10 is defined as the position, where the blade 10 has its largest chord length. The shoulder 40 is typically provided at the boundary between the transition region 32 and the airfoil region 34.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

The wind turbine blade 10 comprises a blade shell comprising two blade shell parts or half shells, a first blade shell part 24 and a second blade shell part 26, typically made of fiber-reinforced polymer. The wind turbine blade 10 may comprise additional shell parts, such as a third shell part and/or a fourth shell part. The first blade shell part 24 is typically a pressure side or upwind blade shell part. The second blade shell part 26 is typically a suction side or downwind blade shell part. The first blade shell part 24 and the second blade shell part 26 are fastened together with adhesive, such as glue, along bond lines or glue joints 28 extending along the trailing edge 20 and the leading edge 18 of the blade 10. Typically, the root ends of the blade shell parts 24, 26 have a semi-circular outer cross-sectional shape.

Figure 2B is a schematic diagram illustrating a cross sectional view of an exemplary wind turbine blade 10, e.g. of the airfoil region 34 of the wind turbine blade 10. The wind turbine blade 10 comprises a leading edge 18, a trailing edge 20, a pressure side 24, a suction side 26, a first spar cap 74, and a second spar cap 76. The wind turbine blade 10 comprises a chord line 38 between the leading edge 18 and the trailing edge 20. The wind turbine blade 10 comprises shear webs 42, such as a leading edge shear web and a trailing edge shear web. The shear webs 42 could alternatively be a spar box with spar sides, such as a trailing edge spar side and a leading edge spar side. The spar caps 74, 76 may comprise carbon fibers while the rest of the shell parts 24, 26 may comprise glass fibers.

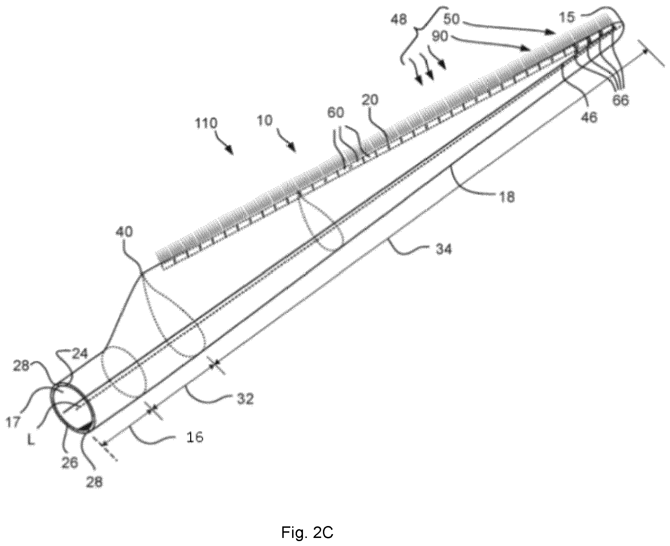

Figure 2C schematically illustrates an example of a wind turbine blade assembly 110. The wind turbine blade assembly 110 comprises a wind turbine blade 10 having the shape of a conventional wind turbine blade illustrated in figure 2A with a root end 17 and a tip end 15 and comprises a root region 16 closest to the hub, a profiled or an airfoil region 34 furthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18. The description of figure 2A regarding the wind turbine blade 10 is generally applicable to the example of the blade of figure 2C.

The wind turbine blade assembly 110 comprises a plurality of noise reduction elements 48, e.g. including a first noise reduction element 50 and a second noise reduction element 90, attached and distributed along the trailing edge 20 of the wind turbine blade 10. The first noise reduction element 50 comprises a first serration part

Each of the plurality of noise reduction elements 48 comprises a base part 60. The base part 60 of each of the plurality of noise reduction elements 48 may be attached to the trailing edge 20 of the wind turbine blade, such as to the suction side 26 or pressure side 24 near the trailing edge 20. The plurality of noise reduction elements 48 may be distributed along the entire length of the trailing edge 20, or the plurality of noise reduction elements 48 may be distributed along part of the length of the trailing edge 20 starting from the tip 15.

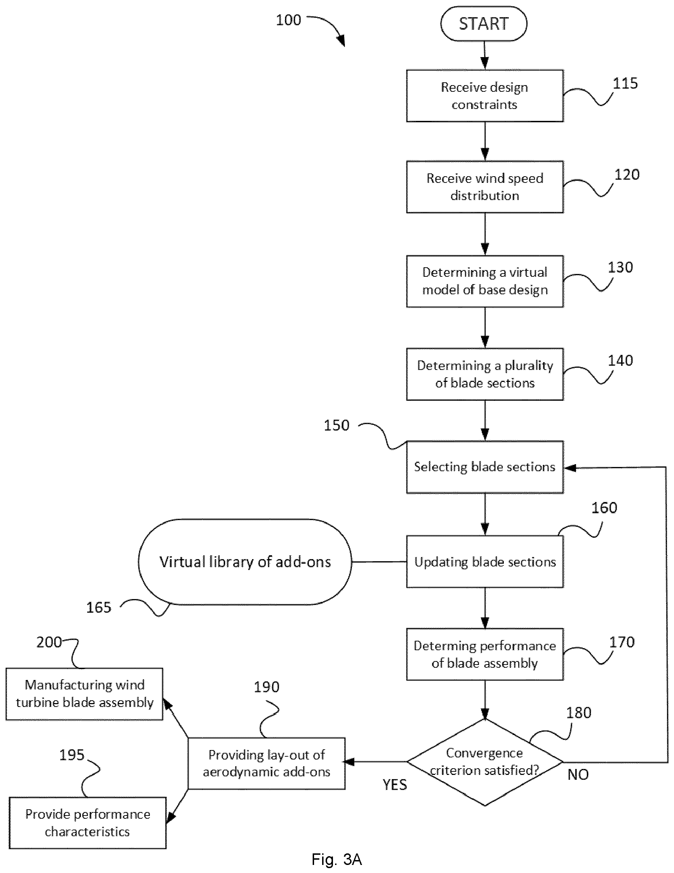

Figure 3a schematically illustrates an example of a computer-implemented method 100 for determining a configuration of a wind turbine blade assembly which includes a wind turbine blade and a plurality of aerodynamic add-ons. The method comprises receiving one or more design constraints at block 115, and receiving a wind speed distribution at block 120. The method further comprises, at block 130, determining a virtual model of a base design for the wind turbine blade, and at block 140 determining a plurality of blade sections, wherein the blade sections correspond to spanwise extending portions of the wind turbine blade.

The method further comprises, at block 150, selecting one or more of the blade sections for modification, and at block 160, generating an updated virtual blade assembly by changing a configuration of virtual aerodynamic add-ons in one or more of the selected blade sections. The virtual aerodynamic add-ons are selected from a virtual library 165.

The method then comprises, at block 170, determining a performance of the virtual blade assembly according to the wind speed distribution by calculating an objective function.

The method 100 further comprises optimizing the objective function while respecting the design constraints by reiterating the steps of blocks 150 -170 until a convergence criterion has been satisfied.

Even though the method 100 has been illustrated in figure 3A with a specific sequence of steps, the sequence of steps should not be understood to be limiting. The order of several steps may be changed. Purely as an example, the order of steps 115, 120, 130 and 140 may be freely interchanged.

Several of the steps of method 100 will now be explained in more detail, as well as some of the different possible implementations of method 100 and of individual steps.

In some examples, the design constraints may include maximum loads on the wind turbine blade assembly. Further design constraints might include a blade mass not to be exceeded, cut-in and cut-out wind speeds, specific market requirements, a noise constraint, and other. The design constraints received at block 115 form one of the basic inputs for the later optimization process. An improved or optimum design for a wind turbine blade assembly optimizing the objective function can only be acceptable if it satisfied with the design constraints. The design constraint may be received from user input through a suitable user interface.

Another basic input for the optimization process is received at block 120, the wind speed distribution. The wind speed distribution may be defined in a variety of ways but will generally define an average or median wind speed, and may also include a probability distribution of other wind speeds within the cut-in wind speed and the cut-out wind speed. The wind speed distribution may be used to check the performance of different potential configurations of aerodynamic add-ons.

The wind speed distribution may be or comprise an effective wind speed distribution. That is, the wind turbine operation and specifically how pitch angles and rotor speed are varied as a function of the free stream wind speed may be taken into account. The effective winds experienced by portions or sections of the blade will not only depend on the free stream wind speed, but also on the turbine's operation.

The wind speed distribution may be received from user input through a usable interface. In other examples, wind speed distributions may be downloaded from a database containing wind data for different sites. The wind speed distribution, particularly the effective wind speed distribution may also be calculated by combining different sources of user input.

At block 130, a virtual model of a base design of the blade may be determined. The base design of the blade may in particularly include an airfoil distribution over the span of the blade.

The base design of the blade forms the starting point for the further optimization, and may correspond to the blade design without any aerodynamic add-ons, or including one or more aerodynamic add-ons which are considered to be part of the default design. The base design may itself be part of a design process taking into account a certain theoretical wind speed distribution and theoretical wind turbine requirements in terms of rotor speed, nominal power etc. This theoretical wind speed distribution and theoretical requirements may in practice be slightly different or significantly different from the actual requirements on a specific wind turbine model, or at a specific wind site. These actual requirements are gathered at blocks 115, and 120 as illustrated before.

The virtual of the blade design may be divided into a plurality of blade sections at block 140. The blade sections correspond to spanwise extending portions of the wind turbine blade. They may have a constant length of e.g. approximately 1 meter, or they may have a varying length along the blade span, e.g. approximately 1 meter in a mid portion of the blade and e.g. approximately 0,5 meters closer to the tip. The division into blade sections at block 140 makes it possible to calculate the performance of each of the blade sections individually.

The blade sections may be determined in such a way that the performance of an individual blade sections may be sufficiently reliably determined assuming a constant cross-section and a constant wind speed, and angle of attack. In operation of a wind turbine, each section of the blade will, depending on the wind speed and the rotational speed, experience a different effective wind speed. Also, the angle of attack of individual sections may vary along the blade span. The angle of attack for a certain portion of a wind turbine blade is a function of a pitch angle (generally prescribed by turbine operation), the free stream wind speed, the rotor speed (generally prescribed by turbine operation), the longitudinal position of the portion along the blade span, and a local twist angle. The blade sections may thus be determined in such a way that a cross-sectional shape of the section may be assumed to be constant, and the operational conditions (effective wind speed, angle of attack) may be assumed to be constant.

Blocks 150 - 170 may be reiterated until an "optimum" blade assembly lay-out has been found for the specific implementation. The optimum that may be found may depend particularly on the objective function that is to be optimized.

In some examples, the objective function includes a performance of the blade with respect to noise. In some examples, the objective function includes a power output of a wind turbine. In examples, the objective function may include both performance of the blade with respect to noise and power output. The performance with respect to noise may affect the wind turbine operation and thereby affect power output.

In some examples, the objective function may be a calculation of Levelized Cost of Energy (LOCE). Such an objective function may take into account both power output, noise constraints (e.g. as a penalty affecting the power output, or as an (imaginary) increase in power output for each dB of noise reduction). If LCOE or some other objective function taking into account the cost of the blade assembly is used, for each of the available blade add-ons, information regarding the cost of the add-ons may be included in the calculations. Such cost may include one or more of manufacturing or procurement cost, assembly cost, maintenance cost.

In each iteration, one or more blade sections may be modified. An add-on may be added to the blade section or may be removed from a virtual blade section. A position of an add-on may be changed, e.g. in a chordwise direction an add-on may be positioned differently, and an add-on may be arranged on the suction side and/or on the pressure side. Such modifications may be made, depending on the circumstances, on the pressure side, on the suction side or both.

After such modifications, a performance of the updated virtual blade assembly according to the wind speed distribution may be calculated using the defined objective function. In examples, this may include determining a performance of the virtual blade assembly by calculating a performance of the plurality of individual blade sections. I.e. the overall performance of the blade assembly is the sum or integration of the performance of individual blade sections.

In examples, calculating the performance of the plurality of blade sections comprises calculating the performance using one or more engineering models. An engineering model may herein be regarded as a simplified mathematical model comprising an equation or set of equations to approximately calculate the performance of a blade section in a specific combination of circumstances. For a given effective wind speed, and given angle of attack the aerodynamic performance of a blade section (assuming constant cross-section and constant airfoil profile) may be relatively quickly calculated. If one or more aerodynamic add-ons are added to such a blade section, the performance of the blade section is evidently changed, but the performance may be estimated or approximately calculated using a (simplified) theoretical behavior of the add-on. Such engineering models may be determined based on experimental wind field fata and wind tunnel data. Such engineering models may also be derived as an analytical model solving the physical equation(s) or as a simplified analytical model.

In a similar manner, engineering models may be used to calculate lift, drag, loads, and noise for each blade section.

In these examples, rather than a complete finite element calculation for an entire blade or for a blade section, the simplified calculations may be used in order to find an optimum solution more quickly and/or with a reduced computational power requirement. In some examples, engineering models may be used in a first group of iterations. In a second group of iterations, in order to more finely tune the wind turbine blade assembly and more precisely determine its performance, finite element calculations might be used.

Such engineering models may also take aeroelastic effects into account, i.e. the engineering models may take into account that depending on the loads, the blade may deform. The deformation itself will affect the aerodynamic flow around the blade assembly. Models that are used to calculate the blade deformation and loads, including stresses, bending moment, etc., for each blade section may include standard finite beam formulation or multibody approaches where each body is a beam element considering non-linear effect of the body motion (rotations and deformations). Such structural models may be coupled with aerodynamic models assuming a steady or an unsteady flow, e.g. considering dynamic changes of wind flow and blade rotation effects including dynamic stall and other phenomena known to those skilled in the art.

In some other examples, rather than engineering models, 2D Computational Fluid Dynamics (CFD) might be used. In yet further examples, if computational power is available, 3D CFD methods may be used.

In some examples, selecting a plurality of virtual aerodynamic add-ons from a library 165 may comprise a plurality of different virtual aerodynamic add-ons to be added to the corresponding selected blade sections. The virtual aerodynamic add-ons may rely on different aerodynamic effects, and may be of different sizes.

The library 165 of virtual add-ons may include information required in the aforementioned engineering models. Such information may include information on cost (to the extent taken into account), the impact they have on noise, and the impact they have on aerodynamic performance (lift coefficient, drag coefficient, aerodynamic moment).

An example of such a virtual library comprising different aerodynamic add-ons is schematically depicted in the following table

| | Add-on 1 | Add-on 2 | Add-on 3 | Add-on 4 | Add-on 5 |
|---|---|---|---|---|---|
| Noise impact | ++ | - | + | +++ | ++ |
| Impact on aerodynamics | 0 | + | + | --- | - |
| Impact on loads | 0 | ++ | - | 0 | - |
| Cost | + | + | ++ | ++ | + |

In the simplified example of the above table, only five types of aerodynamic add-ons have been included, but it will be clear that many more or also less types of aerodynamic add-ons may be considered. In the simplified example of the above table, qualitative characteristics have been indicated for each of the add-ons, but it will be clear that in other examples, the various features for each of the aerodynamic add-ons may be quantified, i.e. expressed with a specific number value.

Aerodynamic add-ons that may be considered for inclusion in one or more of the blade section include aerodynamic add-ons configured to reduce noise e.g. trailing edge serrations, such as e.g., cone serrations, triangular serrations, finlets or other, and of different sizes. Further, aerodynamic add-ons configured for increasing lift (coefficient) for a blade section or generally improving aerodynamic efficiency (UD or C_{L}/C_{D}) may be considered such as e.g., vortex generators, micro-vortex generators (which may be considered to be vortex generators which are small as compared to a boundary layer of the aerodynamic flow around the blade), flaps, slats, microtabs or other. Such add-ons that aim to improve aerodynamic efficiency may also include add-ons that specifically reduce drag such as e.g, riblets or drag reducing surface treatments. Other aerodynamic add-ons may include a leading edge protector (to improve aerodynamic flow around the blade by avoiding erosion, at the same time noise generation may be increased), and spoilers.

Finlets may be regarded as a plurality of generally parallel comb-like array of thin plate like elements protruding from the pressure and/or suction side surface of a blade. Because the plate like elements are arranged close to each other and extend substantially parallel to each other, the aerodynamic flow over the surface proceed in smooth parallel paths. Finlets may extend from about 65 - 80% of the local chord to the trailing edge. Finlets may be provided with different spacings in between and with different heights. Finlets may in examples extend beyond the trailing edge of the blade.

Microtabs generally consist of a small tab placed on the airfoil surface close to the trailing edge and perpendicular to the surface. In general, microtabs may be used on the pressure side of the blade to change a position of airflow separation along the pressure surface with the objective of increasing lift.

In examples, at least two different types of virtual aerodynamic add-ons may be selected from the library.

Different algorithms may be used to optimize the objective function, and perform the iterations until a convergence criterion has been satisfied. In some examples, first-order or second-order optimization algorithms may be used. In other examples, population algorithms such as genetic algorithms may be used. In further examples. In other examples, several different algorithms may be combined.

In some examples, optimizing the objective function may using a genetic algorithm in a first set of iterations. In some examples, optimizing the objective function comprises using a gradient based algorithm (e.g. first-order derivative optimization algorithm) in a second set of iterations, after the first set of iterations. Combining algorithms in this manner has been found to quickly lead to an improved or optimum design for the wind turbine blade assembly.

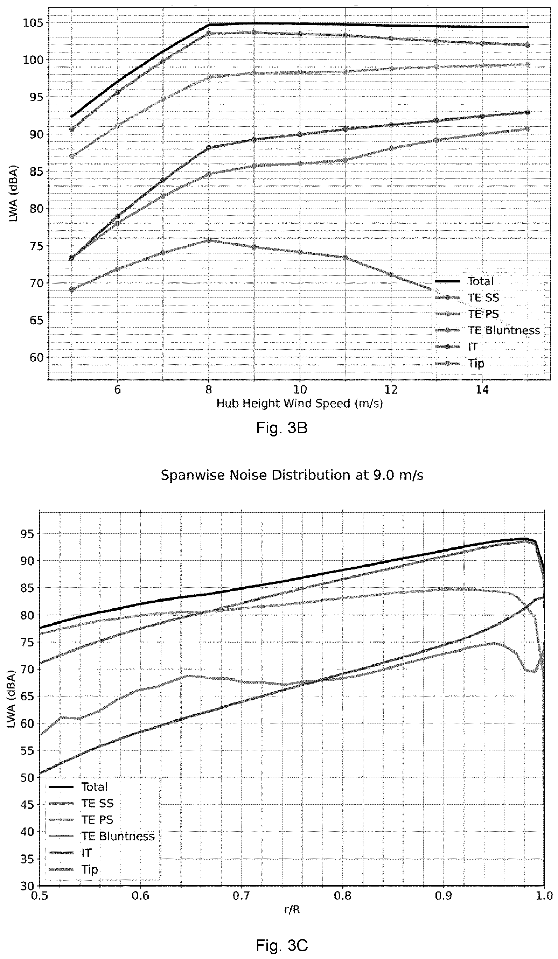

Figures 3B and 3C illustrate a first example of how the optimum configuration of the wind turbine blade assembly may be driven by a specific requirement at a specific site. Figure 3B illustrates noise production of a wind turbine bade as a function of free stream wind speed at hub height. The total noise generated by a wind turbine blade may be assigned to a plurality of different sources of noise. In this example, the different sources of noise may be regarded as trailing edge suction side and pressure side, trailing edge bluntness, inflow turbulence, and noise produced by the tip of the blade. It may be seen that the contribution of each of the sources is different for different wind speeds. As an example, overall noise at a wind speed of 14 m/s is about the same as for 9 m/s, however the contribution of the tip to this noise is much lower at 14 m/s. The contribution of bluntness of the trailing edge is much higher at 14 m/s on the other hand.

In the example of figure 3B, because of the specific implementation of the blade, noise production is to be minimized at a wind speed at hub height of 9 m/s. Knowledge about which sources contribute to noise can drive the selection of suitable add-ons along the span of the blade. Figure 3C illustrates in an example how noise generation may vary along the blade of the span at a given wind speed, in this case 9 m/s. An analysis such as shown in figure 3C can be used by the optimization algorithm(s) in the iterations to optimize the objective function while respecting the constraints. By identifying the most important sources of noise, suitable aerodynamic add-ons can be selected to reduce the noise.

In the specific example, noise produced near the tip is relatively important, and an optimization with a specific noise constraint at 9 m/s may lead to a distribution of trailing edge serrations from about 65 or 70% of the span of the blade to the tip of the blade. In an example, from around 65 - 75% of the span of the blade, triangular serrations may be used, from 75% of the span to about 90% of the span cone serrations may be used, whereas from about 90% to about 100% of the span, triangular serrations may be combined with finlets, the finlets being provided at a suction side.

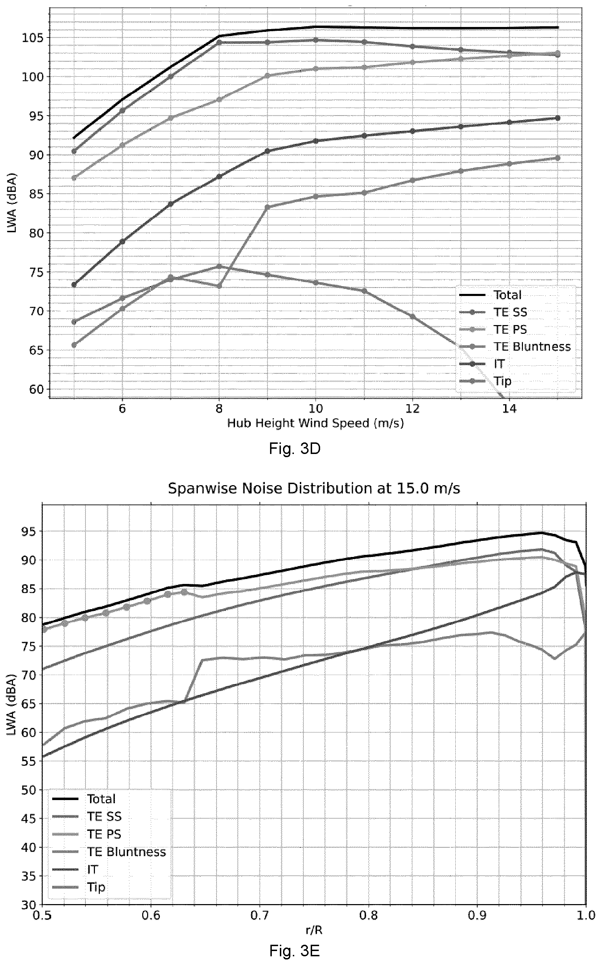

Figure 3D illustrates another example of the different sources of noise and their relative contribution as a function of free stream wind speed at hub height, for a different base design of a wind turbine blade. In the example of figure 3D, the optimization of the blade may be chosen for a specific noise reduction at a wind speed of 15 m/s.

Figure 3E schematically illustrates how noise generation may vary along the span of the blade, i.e. how different blade sections may contribute to overall noise. With a different noise objective in mind, the distribution of aerodynamic add-ons may be different. Trailing edge serrations may again be provided from about 65% of the span of the blade to about 100% of the span of the blade. However in this example, from about 75% of the span of the blade to about 100% of the span of the blade, cone serrations may be used, and from 65% of the span to about 75% of the span, triangular serrations. In this specific example, these serrations may be combined with e.g. finlets at a suction side from 90 - 100% of the span of the blade (and none at the pressure side) and finlets at a pressure side from 75 - 85% of the span of the blade (and none at the suction side).

It may thus be seen how the herein illustrated examples of optimization may lead to different results depending on the design constraints, and objective functions. It may also be seen how such an optimization of aerodynamic add-ons may lead to unexpected, counterintuitive results. In the example of figure 3E it was found e.g. that finlets might be provided at both the suction side and the pressure side but they are asymmetrically distributed on both sides of the blade.

In examples, the convergence criterion may be defined such that iterations are stopped when no meaningful improvement of the objective function is reached. Once the convergence criterion has been reached, the design of the wind turbine blade assembly may be considered frozen for the specific implementation.

In examples, the method may further comprise, at block 190, providing a lay-out of aerodynamic add-ons when the convergence criterion has been satisfied. A publication of the resulting lay-out may be used for manufacturing purposes.

In some examples, the method may further comprise providing, at block 195, providing performance characteristics of the blade. The method may comprise providing one or more of: a noise curve for the wind turbine blade assembly as a function of wind speed, a power curve of the wind turbine as a function of wind speed, one or more loads on the wind turbine blade assembly as a function of wind speed.

In some examples, the method may further comprise manufacturing the wind turbine blade assembly according to the base design of the wind turbine blade and the provided lay-out of aerodynamic add-ons. In particular, the base design of the wind turbine blay may comprise molding the shells of the pressure side and of the suction side and bonding the shells to each other, while including e.g. spar caps and shear webs. The selected aerodynamic add-ons may be separately manufactured and assembled to the wind turbine blade. Assembly with the turbine blade may be carried out in a factory and/or on site, depending on the aerodynamic add-ons.

In a further aspect of the present disclosure, a wind turbine blade obtainable by any of the herein disclosed methods is provided.

In a further aspect of the present disclosure, a computer program comprising instructions which, when the program is executed by a computer, cause the computer to carry out any of the examples of the optimization method herein explained. Such a computer program may be provided on a computer-readable data carrier or on a data carrier signal.

The computer program may be in the form of source code, object code, a code intermediate source and object code such as in partially compiled form, or in any other form suitable for use in the implementation of the processes. The carrier may be any entity or device capable of carrying the computer program.

In yet a further aspect, of the present disclosure, a data processing system is provided, which is configured to carry out any example of the optimization method illustrated herein. Such a data processing system may comprise: a function / a module for receiving one or more design constraints; a function for receiving a wind speed distribution; a function/module for determining a virtual model of a base design for the wind turbine blade; and a function/module for determining a plurality of blade sections, wherein the blade sections correspond to spanwise extending portions of the wind turbine blade. The data processing system may further comprise a function/module for a) selecting one or more of the blade sections for modification; b) generating an updated virtual blade assembly by changing a configuration of virtual aerodynamic add-ons in one or more of the selected blade sections, wherein the virtual aerodynamic add-ons are selected from a virtual library and c) determining a performance of the virtual blade assembly according to the wind speed distribution by calculating an objective function; and further for optimizing the objective function while respecting the design constraints by reiterating the steps a) - c) until a convergence criterion has been satisfied.

Examples of the methods disclosed herein may be implemented with hardware, software, firmware and combinations thereof. Examples of the methods disclosed herein may employ one or more of virtual machines, cloud computing and edge computing.

Those of skill in the art would further appreciate that the various illustrative logical blocks, modules, circuits, and algorithm steps described in connection with the disclosure herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application.

The various illustrative logical blocks, modules, and circuits described in connection with the disclosure herein may be implemented or performed with one or more general-purpose processors, a digital signal processor (DSP), cloud computing architecture, an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

If implemented in software/firmware, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a general purpose or special purpose computer. By way of example, and not limitation, such computer-readable media can comprise RAM, ROM, EEPROM, CD/DVD or other optical disk storage, magnetic disk storage or other magnetic storage devices, or any other medium that can be used to carry or store desired program code means in the form of instructions or data structures and that can be accessed by a general-purpose or special-purpose computer, or a general-purpose or special-purpose processor. Also, any connection is properly termed a computer-readable medium. For example, if the software/firmware is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media.

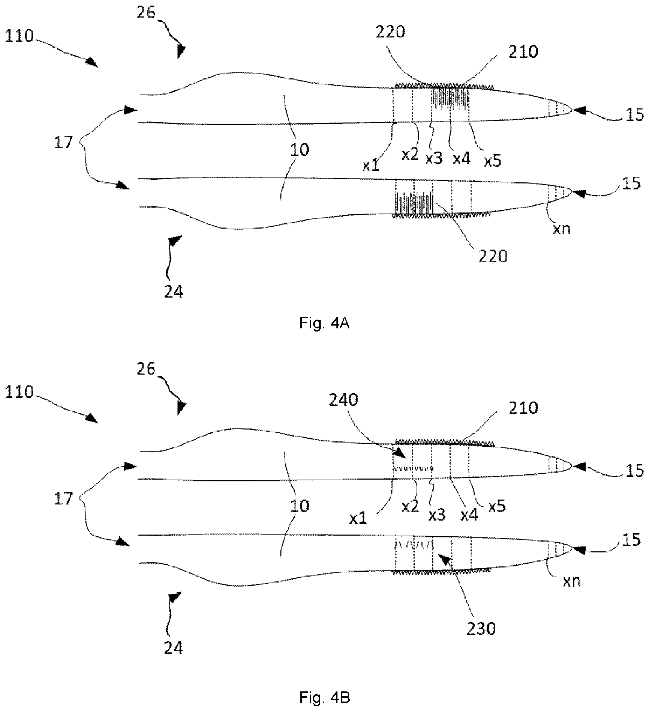

Figure 4A schematically illustrates an example of a wind turbine assembly according to a further aspect of the present disclosure. Figure 4A illustrates an example of a wind turbine blade assembly 110. The wind turbine blade assembly comprises a wind turbine blade 10 extending in a longitudinal direction between a blade root 17 and a blade tip 15 and the wind turbine blade 10 having a leading edge, a trailing edge and a pressure side 24 and a suction side 26.

In figure 4A, different blade sections are indicated extending from longitudinal position x1 to x2, from longitudinal position x2 to x3, from longitudinal position x3 to x4, and from longitudinal position x4 to x5. Such blade sections may be used in examples of the methods hereinbefore explained. Each of these blade section may represent a degree of freedom in the optimization of the wind turbine blade assembly. It is also schematically indicated that the sections near the blade tip may be smaller.

The wind turbine blade assembly 110 further comprises a plurality of a plurality of aerodynamic add-ons of a first type arranged 220 at the pressure side 24 extending from a first longitudinal position x1 to a second longitudinal position, herein x3. The wind turbine blade assembly 110 further comprises a plurality of aerodynamic add-ons 220 of the first type arranged at a suction side 26 extending from a third longitudinal position x3 to a fourth longitudinal positions x4. Herein, the third longitudinal position x3 does not coincide with the first longitudinal position x1 and/or the fourth longitudinal position x4 does not coincide with the second longitudinal position x2.

In other words, the aerodynamic add-ons of the first type 220 are provided both on the pressure side and on the suction side but they are asymmetrically distributed.

In this example, the third longitudinal position at the suction side does coincide with the second longitudinal position at the pressure side, but it should be clear that in other examples this is not necessarily the case.

In this specific example, the aerodynamic add-ons at the suction side are arranged along a portion of the blade that is arranged radially further outwards (closer to the tip) than the aerodynamic add-ons at the pressure side 24. In other examples, there may be overlap between the range of positions at the pressure side 24 and the range of positions at the suction side 26.

In some examples, the wind turbine blade assembly may further comprise a plurality of aerodynamic add-ons 210 of a second type. In this example, the aerodynamic add-ons 210 of the second type may be trailing edge serrations. In the schematic illustration of figure 4A, the trailing edge serrations are depicted both at the suction side and at the pressure side, because they may be regarded as extensions of the trailing edge (which forms the border edge of both the suction side and the pressure side).

In some examples, the aerodynamic add-ons 210 of the second type are arranged between the first and second longitudinal positions at the pressure sideand/or between the third and fourth longitudinal positions of the suction side. Thus, along spanwise portions of the blade add-ons of both the first and the second type may be arranged. In this specific example, the add-ons of the second type extend from the first (radially most inner) longitudinal position x1 to the fourth (radially most outer) longitudinal position x4.

In some examples, the wind turbine blade assembly may further comprise a plurality of aerodynamic add-ons of a third type (different from the first and second types).

In some examples, the first and/or second aerodynamic add-ons may be one or more of the following: triangular trailing edge serrations, trailing edge cone serrations, finlets, vortex generators, flaps, spoilers and microtabs.

In some examples, the aerodynamic add-ons of the first type (i.e. , the aerodynamic add-ons that are asymmetrically distributed between pressure side and suction side) are add-ons configured to in use reduce noise of the wind turbine blade assembly or add-ons configured to in use increase lift or improve aerodynamic efficiency of the wind turbine blade assembly. It has been found that the asymmetric distribution described herein may be beneficial particularly for finlets (for noise reduction) and vortex generators (for lift increase and drag reduction).

In examples, the first, second, third and fourth longitudinal positions may all be arranged in an outer half of the wind turbine blade, i.e. the half of the blade extending from 50 - 100% of the blade span. In some examples, the third and fourth longitudinal position may be arranged in an outer third of the wind turbine blade, i.e. the portion of the blade extending from about 67% to 100% of the span.

Figure 4B schematically illustrates another example of a wind turbine blade assembly. The same reference signs as in figure 4A have been used to indicate the same elements. Figure 4B shows a wind turbine blade assembly 110 comprising: a wind turbine blade 10 extending in a longitudinal direction between a blade root 17 and a blade tip 15 and the wind turbine blade 10 having a leading edge, a trailing edge and a pressure side 24 and a suction side 26. A plurality of aerodynamic add-ons 230 of a first type arranged at the pressure side 24 extending from a first longitudinal position x1 to a second longitudinal position x3. And the assembly further comprises a plurality of aerodynamic add-ons of a second type 240, different from the first type, arranged at a suction side 26 extending from the first longitudinal position x1 to the second longitudinal position x3.

Another kind of asymmetry that may result in an optimization of a blade assembly considering a plurality of different aerodynamic add-ons 230, 240 is thus shown in the example of figure 4B. Instead of the same type of add-on being provided at different longitudinal positions along the pressure and suction sides as in the example of figure 4A, in the example of figure 4B two different types of add-ons may be provided at the same longitudinal positions along the pressure and suction sides.

In the example of figure 4B, the aerodynamic add-ons of the second type 240 have the same working principle as the aerodynamic add-ons of the first type 230 and have dimensions which are different from the dimensions of the aerodynamic add-ons of the first type. In the specific example of figure 4B, micro vortex generators are provided at the suction side 26, whereas vortex generators are provided at the pressure side. Micro vortex generators may herein be regarded smaller versions of vortex generators. Micro vortex generators are vortex generators which are smaller than a local boundary layer thickness.

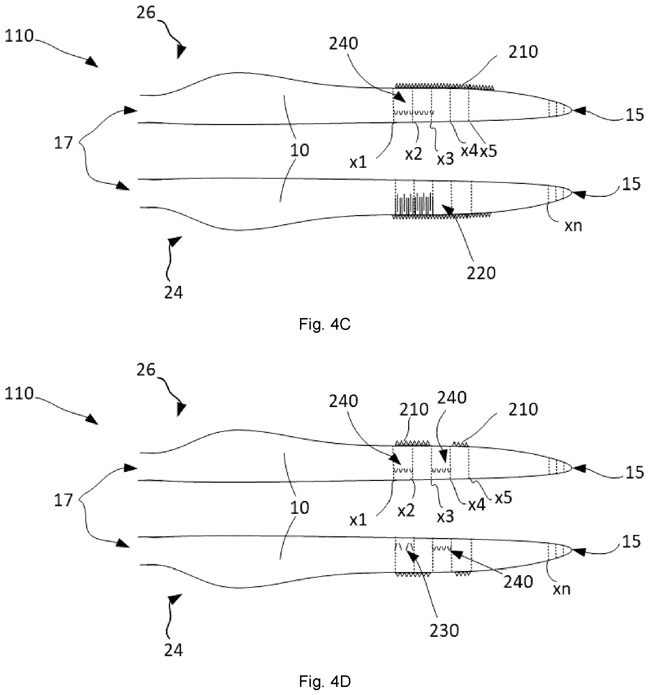

In other examples, like the example of figure 4C, the aerodynamic add-ons of the second type 240 have a different working principle than the aerodynamic add-ons of the first type 220. For example, the aerodynamic add-ons of the first type 220 may be add-ons configured to in use reduce noise (finlets, riblets, or other) of the wind turbine blade assembly. They are shown to be arranged at the pressure side in this example.

The second type of aerodynamic add-ons 240 may be configured to in use increase lift or improve aerodynamic efficiency of the wind turbine blade assembly (e.g. vortex generators, spoilers or other). In this specific example, vortex generators 240 may be arranged at the suction side.

In some examples, the wind turbine blade assembly may further comprise a plurality of aerodynamic add-ons of a third type, different from the first and second types. Specifically, in examples, the third type of add-ons may be provided along an outer half of the blade. The first and second type of add-ons may also be provided along an outer half of the blade.

In the illustrated example, the third type of aerodynamic add-ons are serrations, specifically triangular serrations. It should be clear that depending on the specific design constraints and the specific objective function to be optimized, even further types of aerodynamic add-ons may be used.

In yet further examples, a plurality of aerodynamic add-ons may be arranged at the pressure side extending from a first to a second longitudinal position, and a plurality of aerodynamic add-ons arranged at a suction side extending from a third to a fourth longitudinal positions. The first, second, third and fourth positions are arranged in an outer half of the wind turbine bade. The third longitudinal position does not coincide with the first longitudinal position and/or the fourth longitudinal position does not coincide with the second longitudinal positions.

That is, the aerodynamic add-ons are arranged along different portions of the blade on the pressure side than on the suction side. The aerodynamic add-ons may be the same at the suction and pressure side, or they may be different.

In specific examples, the first, second, third and fourth positions are arranged in an outer third of the wind turbine blade. Specifically for the optimization of the performance of the blade with respect to noise, the outer third of the blade is important, and an optimization may lead to the use of multiple add-ons in the outer portion of the blade.

In some examples, the aerodynamic add-ons at the pressure side are aerodynamic add-ons of a first type and the aerodynamic add-ons at the suction side are aerodynamic add-ons of a second type, different from the first type.

The aerodynamic add-ons of the second type may or may not have the same working principle as the aerodynamic add-ons of the first type. The aerodynamic add-ons of the second type may or may not have dimensions which are different from the dimensions of the aerodynamic add-ons of the first type.

Yet a further example of a wind turbine blade assembly according to the present disclosure is shown in figure 4D. The example of figure 4D shows a wind turbine blade assembly 100 comprising a wind turbine blade 10 extending in a longitudinal direction between a blade root 17 and a blade tip 15 and the wind turbine blade having a leading edge, a trailing edge and a pressure side 24 and a suction side 26. The blade assembly 100 further comprises a plurality of aerodynamic add-ons 230 arranged at the pressure side 24 extending from a first longitudinal position x1 to a second longitudinal position x2, and a plurality of aerodynamic add-ons 240 arranged at a suction side 26 extending from the first x1 to the second longitudinal position x2. The blade assembly further comprises trailing edge serrations 210 along the trailing edge from the first longitudinal position x1 to the second longitudinal position x2.

The blade assembly further comprises a plurality of aerodynamic add-ons 240 arranged at the pressure side between a third longitudinal position x3 and a fourth longitudinal position x4, and a plurality of aerodynamic add-ons 240 arranged at the suction side 26 between the third x3 and the fourth longitudinal position x4, wherein no trailing edge serrations are provided between the third and fourth longitudinal position.

Thus, in accordance with this aspect, a blade assembly is provided in which aerodynamic add-ons (e.g. on both the pressure side and the suction side) are combined with trailing edge serrations along a portion of the blade, and aerodynamic add-ons (e.g. on both the pressure side and the suction side) along a portion of the blade where no trailing edge serrations are provided.

These portions of the blade may be located in the outer half of the blade, and in some examples in the outer third of the blade. In examples, the trailing edge serrations may be triangular serrations. In other examples, they may be e.g. cone serrations.

In this example, the add-ons 240 represent vortex generators, which may be provided on both the suction side 26 and the pressure side 24. The add-ons 230 represent micro vortex generators, which may also be provided on both the suction side 26 and the pressure side 24. In other examples, the aerodynamic add-ons may be configured specifically to reduce noise and may be e.g.

In examples, the arrangement of the first plurality of aerodynamic add-ons is different from the arrangement of the second plurality of aerodynamic add-ons at the suction side. Similarly, the arrangement of the third plurality of aerodynamic add-ons may be different from the arrangement of the fourth plurality of aerodynamic add-ons.

Figure 4D also illustrates an example of a wind turbine blade assembly 100 according to yet another aspect of the present disclosure, namely an assembly 100 comprising trailing edge serrations 210 extending from a first longitudinal position x1 to a second longitudinal position x2, and including no trailing edge serrations between the second longitudinal position x2 and a third longitudinal position x3, and further comprising trailing edge serrations 210 extending from the third longitudinal position x3 to a fourth longitudinal position x4.

The trailing edge serrations 210 are shown to be triangular serrations, but they may also be other types of serrations, e.g., cone serrations.

The various aspects commented herein may also be combined, i.e. a discontinuity of trailing edge serrations as shown in figure 4D may be combined with further asymmetries disclosed herein.

As shown in previous examples, the first and/or second aerodynamic add-ons may be one or more of the following: triangular trailing edge serrations, trailing edge cone serrations, finlets, vortex generators, flaps, spoilers and microtabs.

For completeness, some aspects of the present disclosure are set out in the following numbered clauses:
Clause 1. A wind turbine blade assembly comprising:
   a wind turbine blade extending in a longitudinal direction between a blade root and a blade tip and the wind turbine blade having a leading edge, a trailing edge and a pressure side and a suction side,
   a plurality of aerodynamic add-ons of a first type arranged at the pressure side extending from a first to a second longitudinal position, and
   a plurality of aerodynamic add-ons of the first type arranged at a suction side extending from a third to a fourth longitudinal positions, and wherein
   the third longitudinal position does not coincide with the first longitudinal position and/or the fourth longitudinal position does not coincide with the second longitudinal positions.
Clause 2. The wind turbine blade assembly according to clause 1, wherein the third longitudinal position is closer to the blade tip than the second longitudinal position.
Clause 3. The wind turbine blade assembly according to clause 1 or 2, further comprising a plurality of aerodynamic add-ons of a second type.
Clause 4. The wind turbine blade assembly according to clause 3, wherein the aerodynamic add-ons of the second type are arranged between the first and second longitudinal position and/or between the third and fourth longitudinal position.
Clause 5. The wind turbine blade assembly according to clause 3 or 4, further comprising a plurality of aerodynamic add-ons of a third type.
Clause 6. The wind turbine blade according to any of clauses 1 - 5, wherein the first and/or second aerodynamic add-ons are one or more of the following: triangular trailing edge serrations, trailing edge cone serrations, finlets, vortex generators, flaps, spoilers and microtabs.
Clause 7. The wind turbine blade assembly according to any of clauses 1 - 5, wherein the aerodynamic add-ons of the first type are add-ons configured to in use reduce noise of the wind turbine blade assembly or add-ons configured to in use increase lift of the wind turbine blade assembly.
Clause 8. The wind turbine blade assembly according to any of clauses 1 - 7, wherein the first, second, third and fourth longitudinal positions are arranged in an outer half of the wind turbine blade.
Clause 9. The wind turbine blade assembly according to clause 8, wherein the third and fourth longitudinal position are arranged in an outer third of the wind turbine blade.
Clause 10. A computer-implemented method for determining a configuration of a wind turbine blade assembly including a wind turbine blade and a plurality of aerodynamic add-ons, the method comprising:
   receiving one or more design constraints;
   receiving a wind speed distribution;
   determining a virtual model of a base design for the wind turbine blade;
   determining a plurality of blade sections, wherein the blade sections correspond to spanwise extending portions of the wind turbine blade; and further comprising:
      a) selecting one or more of the blade sections for modification;
      b) generating an updated virtual blade assembly by changing a configuration of virtual aerodynamic add-ons in one or more of the selected blade sections, wherein the virtual aerodynamic add-ons are selected from a virtual library;
      c) determining a performance of the updated virtual blade assembly according to the wind speed distribution by calculating an objective function; and
   optimizing the objective function while respecting the design constraints by reiterating the steps a) - c) until a convergence criterion has been satisfied.
Clause 11. The method according to clause 10, wherein the objective function includes a performance of the blade with respect to noise.
Clause 12. The method according to clause 10 or 11, wherein the objective function includes a power output of a wind turbine.
Clause 13. The method according to any of clauses 10 - 12, wherein step b) comprises selecting at least two different types of virtual aerodynamic add-ons from the library.
Clause 14. The method according to any of clauses 10 - 13, wherein step b) comprises changing a position of an aerodynamic add-on within one or more of the corresponding blade sections.
Clause 15. The method according to any of clauses 10 - 14, wherein step b) comprises adding a virtual aerodynamic add-on to one or more of the selected blade sections.
Clause 16. The method according to any of clauses 10 - 15, wherein step b) comprises removing a virtual aerodynamic add-one to one or more of the selected blade section.
Clause 17. The method according to any of clauses 10 - 16, wherein optimizing the objective function comprises using a genetic algorithm in a first set of iterations.
Clause 18. The method according to clause 17, wherein optimizing the objective function comprises using a gradient based algorithm in a second set of iterations, after the first set of iterations.
Clause 19. The method according to any of clauses 10 -18, wherein the design constraints include maximum loads on the wind turbine blade assembly.
Clause 20. The method according to any of clauses 10 - 19, wherein step c) includes determining a performance of the virtual blade assembly by calculating a performance of the plurality of blade sections.
Clause 21. The method according to clause 20, wherein calculating the performance of the plurality of blade sections comprises calculating the performance using one or more engineering models.
Clause 22. The method according to any of clauses 10 - 21, and further comprising providing one or more of: a noise curve for the wind turbine blade assembly as a function of wind speed, a power curve of the wind turbine as a function of wind speed, one or more loads on the wind turbine blade assembly as a function of wind speed.
Clause 23. The method according to any of clauses 10 - 22, and further comprising providing a lay-out of aerodynamic add-ons when the convergence criterion has been satisfied.
Clause 24. The method according to clause 23, and further comprising manufacturing the wind turbine blade assembly according to the base design of the wind turbine blade and the provided lay-out of aerodynamic add-ons.
Clause 25. A wind turbine blade obtainable by the method according to clause 24.
Clause 26. A computer program comprising instructions which, when the program is executed by a computer, cause the computer to carry out the method of any of clauses 10 - 23.
Clause 27. A computer-readable data carrier having stored thereon the computer program of clause 26.
Clause 28. A data carrier signal carrying the computer program of claim 27.
Clause 29. A data processing system configured to carry out any of the methods of clauses 10-22.
Clause 30. A data processing system comprising:
   a function for receiving one or more design constraints;
   a function for receiving a wind speed distribution;
   a function for determining a virtual model of a base design for the wind turbine blade;
   a function for determining a plurality of blade sections, wherein the blade sections correspond to spanwise extending portions of the wind turbine blade; and further comprising:
      a function for
      a) selecting one or more of the blade sections for modification;
      b) generating an updated virtual blade assembly by changing a configuration of virtual aerodynamic add-ons in one or more of the selected blade sections, wherein the virtual aerodynamic add-ons are selected from a virtual library;
      c) determining a performance of the updated virtual blade assembly according to the wind speed distribution by calculating an objective function; and for optimizing the objective function while respecting the design constraints by reiterating the steps a) - c) until a convergence criterion has been satisfied.
Clause 31. A wind turbine blade assembly comprising:
   a wind turbine blade extending in a longitudinal direction between a blade root and a blade tip and the wind turbine blade having a leading edge, a trailing edge and a pressure side and a suction side,
   a plurality of aerodynamic add-ons of a first type arranged at the pressure side extending from a first to a second longitudinal position, and
   a plurality of aerodynamic add-ons of a second type, different from the first type, arranged at a suction side extending from the first to the second longitudinal positions.
Clause 32. The wind turbine blade assembly of clause 31, wherein the aerodynamic add-ons of the second type have the same working principle as the aerodynamic add-ons of the first type and have dimensions which are different from the dimensions of the aerodynamic add-ons of the first type.
Clause 33. The wind turbine blade assembly of clause 31, wherein the aerodynamic add-ons of the second type have a different working principle than the aerodynamic add-ons of the first type.
Clause 34. The wind turbine blade assembly according to any of clauses 30 - 33, wherein the aerodynamic add-ons of the first type are add-ons configured to in use reduce noise of the wind turbine blade assembly or add-ons configured to in use increase lift of the wind turbine blade assembly.
Clause 35. The wind turbine blade according to any of clauses 30 - 34, wherein the first and/or second aerodynamic add-ons are one or more of the following: triangular trailing edge serrations, trailing edge cone serrations, finlets, vortex generators, flaps, spoilers and microtabs.
Clause 36. The wind turbine blade assembly according to any of clauses 31 - 35, further comprising a plurality of aerodynamic add-ons of a third type.
Clause 37. A wind turbine blade assembly comprising:
   a wind turbine blade extending in a longitudinal direction between a blade root and a blade tip and the wind turbine blade having a leading edge, a trailing edge and a pressure side and a suction side,
   a plurality of aerodynamic add-ons arranged at the pressure side extending from a first to a second longitudinal position, and
   a plurality of aerodynamic add-ons arranged at a suction side extending from a third to a fourth longitudinal positions, and wherein
   the first, second, third and fourth positions are arranged in an outer half of the wind turbine bade, and wherein
   the third longitudinal position does not coincide with the first longitudinal position and/or the fourth longitudinal position does not coincide with the second longitudinal positions.
Clause 38. The wind turbine blade assembly according to clause 37, wherein the first, second, third and fourth positions are arranged in an outer third of the wind turbine blade.
Clause 39. The wind turbine blade assembly according to clause 37 or 38, wherein the aerodynamic add-ons at the pressure side are aerodynamic add-ons of a first type and the aerodynamic add-ons at the suction side are aerodynamic add-ons of a second type, different from the first type.
Clause 40. The wind turbine blade assembly of clause 39, wherein the aerodynamic add-ons of the second type have the same working principle as the aerodynamic add-ons of the first type and have dimensions which are different from the dimensions of the aerodynamic add-ons of the first type.
Clause 41. The wind turbine blade assembly of clause 39, wherein the aerodynamic add-ons of the second type have a different working principle than the aerodynamic add-ons of the first type.
Clause 42. The wind turbine blade assembly according to any of clauses 39 - 41, wherein the aerodynamic add-ons of the first type are add-ons configured to in use reduce noise of the wind turbine blade assembly or add-ons configured to in use increase lift of the wind turbine blade assembly.
Clause 43. The wind turbine blade according to any of clauses 39 - 42, wherein the first and/or second aerodynamic add-ons are one or more of the following: triangular trailing edge serrations, trailing edge cone serrations, finlets, vortex generators, flaps, spoilers and microtabs.
Clause 44. A wind turbine blade assembly comprising a wind turbine blade extending in a longitudinal direction between a blade root and a blade tip and the wind turbine blade having a leading edge, a trailing edge and a pressure side and a suction side, and
   further comprising trailing edge serrations along the trailing edge from a first longitudinal position to a second longitudinal position, and
   further comprising a first plurality of aerodynamic add-ons arranged at the pressure side between the first and the second longitudinal position, and
   a second plurality of aerodynamic add-ons arranged at a suction side between the first and the second longitudinal position, wherein
   the arrangement of the first plurality of aerodynamic add-ons is different from the arrangement of the second plurality of aerodynamic add-ons at the suction side.
Clause 45. The wind turbine blade assembly according to clause 44, wherein the second longitudinal position is at or near the tip of the blade.
Clause 46. The wind turbine blade assembly according to clause 44 or clause 45, wherein the first longitudinal position is in an outer half of the blade, optionally within an outer third of the blade.
Clause 47. The wind turbine blade assembly according to any of clauses 44 - 46, wherein the first plurality of aerodynamic add-ons is different from the second plurality of aerodynamic add-ons.
Clause 48. The wind turbine blade assembly according to any of clauses 44 - 47 ,wherein the first plurality of aerodynamic add-ons is arranged at different longitudinal positions than the second plurality of aerodynamic add-ons.
Clause 49. The wind turbine blade assembly according to any of clauses 44 - 48, wherein the first plurality of aerodynamic add-ons and/or second plurality of aerodynamic add-ons comprise add-ons configured to in use reduce noise of the wind turbine blade assembly.
Clause 50. The wind turbine blade assembly according to any of clauses 44 - 49, wherein the first plurality of aerodynamic add-ons and/or second plurality of aerodynamic add-ons comprise add-ons configured to in use increase lift of the wind turbine blade assembly.
Clause 51. The wind turbine blade according to any of clauses 44 - 50, wherein the first plurality of aerodynamic add-ons and/or the second plurality of aerodynamic add-ons comprise one or more of the following: finlets, vortex generators, flaps, spoilers and microtabs.
Clause 52. The wind turbine blade assembly according to any of clauses 44 - 51, wherein the first plurality of aerodynamic add-ons at the pressure side have a different working principle than the second plurality of aerodynamic add-ons.
Clause 53. A wind turbine blade assembly comprising a wind turbine blade extending in a longitudinal direction between a blade root and a blade tip and the wind turbine blade having a leading edge, a trailing edge and a pressure side and a suction side, further comprising a first plurality of aerodynamic add-ons arranged at the pressure side extending from a first longitudinal position to a second longitudinal position, and a second plurality of aerodynamic add-ons arranged at the suction side extending from the first to the second longitudinal position, and trailing edge serrations along the trailing edge from the first longitudinal position to the second longitudinal position, and the wind turbine blade assembly further comprising a third plurality of aerodynamic add-ons arranged at the pressure side between a third longitudinal position and a fourth longitudinal position, and a fourth plurality of aerodynamic add-ons arranged at the suction side between the third longitudinal position and the fourth longitudinal position, wherein no trailing edge serrations are provided between the third and fourth longitudinal position.
Clause 54. The wind turbine blade according to clause 53, wherein the first and/or second and/or third and/or fourth plurality of aerodynamic add-ons are one or more of the following: finlets, vortex generators, flaps, spoilers and microtabs.
Clause 55. The wind turbine blade assembly according to clause 53 or clause 54, wherein the first to fourth longitudinal positions are in an outer half of the blade, optionally within an outer third of the blade.
Clause 56. The wind turbine blade assembly according to any of clauses 53 - 55, wherein the first plurality of aerodynamic add-ons is different from the second plurality of aerodynamic add-ons.
Clause 57. The wind turbine blade assembly according to any of clauses 53 - 56, wherein the third plurality of aerodynamic add-ons is different from the fourth plurality of aerodynamic add-ons.
Clause 58. The wind turbine blade assembly according to any of clauses 53 - 57, wherein the first plurality of aerodynamic add-ons and/or second plurality of aerodynamic add-ons comprise add-ons configured to in use reduce noise of the wind turbine blade assembly.
Clause 59. The wind turbine blade assembly according to any of clauses 53 - 58, wherein the third plurality of aerodynamic add-ons and/or fourth plurality of aerodynamic add-ons comprise add-ons configured to in use reduce noise of the wind turbine blade assembly.
Clause 60. The wind turbine blade assembly according to any of clauses 53 - 59, wherein the first plurality of aerodynamic add-ons and/or second plurality of aerodynamic add-ons comprise add-ons configured to in use increase lift of the wind turbine blade assembly.
Clause 61. A wind turbine blade assembly comprising a wind turbine blade extending in a longitudinal direction between a blade root and a blade tip and the wind turbine blade having a leading edge, a trailing edge and a pressure side and a suction side,
   further comprising trailing edge serrations extending from a first longitudinal position to a second longitudinal position, and
   including no trailing edge serrations between the second longitudinal position and third longitudinal position, and
   further comprising trailing edge serrations extending from the third longitudinal position to a fourth longitudinal position.
Clause 62. The wind turbine blade assembly according to clause 61, wherein the fourth longitudinal position is at or near the blade tip.
Clause 63. The wind turbine blade assembly according to clause 61 or 62, wherein the first, second, third and fourth longitudinal positions are in an outer half of the blade, optionally within an outer third of the blade.
Clause 64. The wind turbine blade assembly according to any of clauses 61 - 63, further comprising a first plurality of aerodynamic add-ons arranged at the suction side and/or at the pressure side extending from the first to the second longitudinal position.
Clause 65. The wind turbine blade assembly according to any of clauses 61 - 64, further comprising a second plurality of aerodynamic add-ons arranged at the pressure side and/or at the suction side between the second and third longitudinal positions.
Clause 66. The wind turbine blade assembly according to any of clauses 61 - 65, wherein the first plurality of aerodynamic add-ons is different from the second plurality of aerodynamic add-ons.
Clause 67. The wind turbine blade assembly according to any of clauses 61 - 66, wherein the first plurality of aerodynamic add-ons and/or second plurality of aerodynamic add-ons comprise add-ons configured to in use reduce noise of the wind turbine blade assembly.
Clause 68. The wind turbine blade assembly according to any of clauses 61 - 67, wherein the first plurality of aerodynamic add-ons and/or second plurality of aerodynamic add-ons comprise add-ons configured to in use increase lift of the wind turbine blade assembly.
Clause 69. The wind turbine blade according to any of clauses 61 - 68, wherein the first and/or second plurality of aerodynamic add-ons are one or more of the following: finlets, vortex generators, flaps, spoilers and microtabs.
Clause 70. The wind turbine blade assembly according to any of clauses 61 - 69, wherein the trailing edge serrations are triangular serrations or cone serrations.

This written description uses examples to disclose a teaching, including the preferred embodiments, and also to enable any person skilled in the art to put the teaching into practice, including making and using any devices or systems and performing any incorporated methods. The patentable scope is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. Aspects from the various embodiments described, as well as other known equivalents for each such aspects, can be mixed and matched by one of ordinary skill in the art to construct additional embodiments and techniques in accordance with principles of this application. If reference signs related to drawings are placed in parentheses in a claim, they are solely for attempting to increase the intelligibility of the claim, and shall not be construed as limiting the scope of the claim.

## Claims

1. A computer-implemented method for determining a configuration of a wind turbine blade assembly including a wind turbine blade and a plurality of aerodynamic add-ons, the method comprising:
receiving one or more design constraints;
receiving a wind speed distribution;
determining a virtual model of a base design for the wind turbine blade;
determining a plurality of blade sections, wherein the blade sections correspond to spanwise extending portions of the wind turbine blade; and further comprising:
a) selecting one or more of the blade sections for modification;
b) generating an updated virtual blade assembly by changing a configuration of virtual aerodynamic add-ons in one or more of the selected blade sections, wherein the virtual aerodynamic add-ons are selected from a virtual library;
c) determining a performance of the updated virtual blade assembly according to the wind speed distribution by calculating an objective function; and
optimizing the objective function while respecting the design constraints by reiterating the steps a) - c) until a convergence criterion has been satisfied.

2. The method according to claim 1, wherein the objective function includes a performance of the wind turbine blade assembly with respect to noise.

3. The method according to claim 1 or 2, wherein the objective function includes a power output of a wind turbine.

4. The method according to any of claims 1 - 3, wherein step b) comprises selecting at least two different types of virtual aerodynamic add-ons from a library.

5. The method according to any of claims 1 - 4, wherein step b) comprises changing a position of an aerodynamic add-on within one or more of the corresponding blade sections.

6. The method according to any of claims 1 - 5, wherein step b) comprises adding a virtual aerodynamic add-on to one or more of the selected blade sections.

7. The method according to any of claims 1 - 6, wherein step b) comprises removing a virtual aerodynamic add-one to one or more of the selected blade sections.

8. The method according to any of claims 1 - 7, wherein optimizing the objective function comprises using a genetic algorithm in a first set of iterations.

9. The method according to claim 8, wherein optimizing the objective function comprises using a gradient based algorithm in a second set of iterations, after the first set of iterations.

10. The method according to any of claims 1 - 9, wherein step c) includes determining a performance of the updated virtual blade assembly by calculating a performance of the plurality of blade sections.

11. The method according to claim 10, wherein calculating the performance of the plurality of blade sections comprises calculating the performance using one or more engineering models.

12. The method according to any of claims 1 - 11, and further comprising providing a lay-out of aerodynamic add-ons when the convergence criterion has been satisfied and further comprising manufacturing the wind turbine blade assembly according to the base design of the wind turbine blade and the provided lay-out of aerodynamic add-ons.

13. A wind turbine blade obtainable by the method according to claim 12.

14. A computer program comprising instructions which, when the program is executed by a computer, cause the computer to carry out the method of any of claims 1 - 12.

15. A data processing system comprising:
a function for receiving one or more design constraints;
a function for receiving a wind speed distribution;
a function for determining a virtual model of a base design for a wind turbine blade;
a function for determining a plurality of blade sections, wherein the blade sections correspond to spanwise extending portions of the wind turbine blade; and further comprising:
a function for
a) selecting one or more of the blade sections for modification;
b) generating an updated virtual blade assembly by changing a configuration of virtual aerodynamic add-ons in one or more of the selected blade sections, wherein the virtual aerodynamic add-ons are selected from a virtual library;
c) determining a performance of the updated virtual blade assembly according to the wind speed distribution by calculating an objective function; and for optimizing the objective function while respecting the design constraints by reiterating the steps a) - c) until a convergence criterion has been satisfied.
